**Europäisches Patentamt**

**European Patent Office**

**Office européen des brevets**

(19)

(11) Veröffentlichungsnummer: **0 131 199**
**B1**

(12) **EUROPÄISCHE PATENTSCHRIFT**

(45) Veröffentlichungstag der Patentschrift:
**07.10.87**

(51) Int. Cl.⁴: **B 02 C 18/10**

(21) Anmeldenummer: **84107335.6**

(22) Anmeldetag: **26.06.84**

(54) **Häckselgerät für Gartenabfälle und dergleichen.**

(30) Priorität: **06.07.83 DE 3324274**

(43) Veröffentlichungstag der Anmeldung:
**16.01.85 Patentblatt 85/3**

(45) Bekanntmachung des Hinweises auf die Patenterteilung:
**07.10.87 Patentblatt 87/41**

(84) Benannte Vertragsstaaten:
**AT BE DE FR GB IT SE**

(56) Entgegenhaltungen:
**CH - A - 127 469**
**CH - A - 643 156**
**DE - A - 1 779 285**
**DE - A - 3 031 231**
**DE - A - 3 139 788**
**FR - A - 2 380 689**
**GB - A - 2 057 294**
**GB - A - 2 098 504**
**US - A - 3 527 278**

(73) Patentinhaber: **Leonhard Schmid KG, Ulmer Strasse 249/251, D-8900 Augsburg (DE)**

(72) Erfinder: **Mordstein, Johann, Waldstrasse 6a, D-8901 Deuringen (DE)**
Erfinder: **Karg, Erwin, Alte Strasse 14d, D-8902 Neusäss (DE)**

(74) Vertreter: **Munk, Ludwig, Dipl.-Ing., Patentanwalt Prinzregentenstrasse 1, D-8900 Augsburg (DE)**

## Beschreibung

Die Erfindung betrifft ein Häckselgerät für Gartenabfälle und dergleichen, vorzugsweise von weicher Beschaffenheit, das auf Beinen hochsteht und mit einer um eine lotrechte Achse rotierenden Trägerscheibe für wenigstens ein Messer versehen ist, das über einem durch die Trägerscheibe hindurchgehenden vorlaufenden Schlitz auf ihr befestigt ist und dessen über die Trägerscheiben-Oberseite vorragende Längsschneide mit mindestens einem stationären Gegenmesser zusammenwirkt, das im Bereich der unteren Randkontur eines mit einem Einfüllschacht versehenen Beschickungsbehälters angeordnet ist.

Bei einem bekannten Gerät dieser Art (DE-U 79 24 501) findet das beschriebene Schneidwerk, das mit hoher Umdrehung (ca. 3 000 U/min.) betrieben wird, wegen seiner vorzüglichen Eignung für die Häckselung von harten Abfällen, wie Holzästen, Verwendung. Für den Einsatz desselben Geräts zur Zerkleinerung von Gartenabfällen von weicher Beschaffenheit, wie z.B. Lauf, ragen von der Trägerscheibe zusätzlich zu den Messern weit in den Beschickungsraum vorstehende Vorzerkleinerungsflügel. Nachteilig hierbei ist, dass durch sie das weiche Material zerschlagen wird und zur Musbildung führt, was Fäulnis erregen kann, die nicht erwünscht ist. Nachteilig ist dabei ferner, dass sich an den Vorzerkleinerungsflügeln langfaserige Teile verfangen und festkleben bleiben, was den Materialdurchsatz beeinträchtigt, zumal zwischen der Beschickungsrichtung und der Auslassrichtung ein Umlenken im Materialfluss stattfindet.

Der Erfindung liegt deshalb die Aufgabe zugrunde, zur Vermeidung der genannten Nachteile ein Häckselgerät der eingangs beschriebenen Art unter Wahrung seiner vorteilhaften Eigenschaften so zu verbessern, dass damit auch weiche Gartenabfälle sauber zerhäckselt werden bei einem möglichst knappen Durchsatzfluss des Materials ohne nennenswerte Ablenkungen.

Diese Aufgabe wird gemäss der Erfindung dadurch gelöst, dass eine blosse, allenfalls mit einem abwärtigen Randkragen versteifte, die Messerträgerscheibe überdeckende waagerechte Grundplatte auf den Beinen befestigt ist und als auf seiner Oberseite den Einfüllschacht neben dem Elektromotor tragendes Gerätegestell dient, an dessen Unterseite ein lotrecht stehender, unten offener Auswurfschacht befestigt ist, der die an der Welle des Motors sitzende Messerträgerscheibe koaxial umgibt.

Die Erfindung bedarf keines Gehäuses für den Zerkleinerungsraum und keiner daraus abzweigenden Ablenkung zu einem besonderen Auswurfkanal. Das Häckseln vollzieht sich bei der Erfindung vielmehr ausschliesslich zwischen der Grundplatte und der Messerträgerscheibe. Das zu zerkleinernde Gut kommt dabei unmittelbar an der Einfüllschachtmündung in den Schnittbereich der Längsschneide des Messers. Das gehäckselte Gut kann ohne weitere Behinderung durch die Durchgangsschlitze der Trägerscheibe hindurchfallen.

Der Materialdurchgang beschränkt sich auf den kürzestmöglichen Weg. Das Gerätegestell, an dem alles sitzt, ist auf eine blosse Grundplatte beschränkt. Auf ihrer Unterseite trägt sie bloss einen unten offenen Schacht zum Herausfallen des Häckselgutes in einen darunterstellbaren Behälter.

Gemäss einer Weiterbildung der Erfindung ist noch vorgesehen, dass der Auswurfschacht die Trägerscheibe mit einem zur Verhinderung von Verstopfungen ausreichend übergreifenden Abstand umgibt. Selbst wenn sich also Materialteilchen von der Trägerscheibe abschleudern sollten, lässt sich durch die genannte Massnahme erreichen, dass jede Verstopfungsgefahr ausgeschlossen ist.

Dem Herausschleudern kann gemäss einer weiteren Fortbildung der Erfindung durch einen aufragenden Randkragen an der Trägerscheibe entgegengewirkt werden.

In weiterer Fortbildung des Erfindungsgedankens ist die Längsschneide des Messers in ihrer radialen Erstreckung so verschränkt, dass sie zum äusseren Trägerscheibenrand hin in Drehrichtung vorläuft. Damit verläuft der Kreuzungspunkt zwischen der Messerlängsschneide und dem von dem Mündungsrand des Einfüllschachtes gebildeten oder ihn haltenden Gegenmesser von aussen nach innen auf der Trägerscheibe und wirkt der Fliehkraft entgegen. Dies hilft ausserdem einen sauberen Schnitt optimieren.

Zur Vervollkommnung der vollständigen Zerhäckselung können ein oder mehrere in Drehrichtung der Einfüllschachtmündung in kurzen Abständen nachstationierte Nachschneidegegenmesser, vorzugsweise in radialer Längsschneide-Erstreckung, vorgesehen werden.

Der Querschnitt des Einfüllschachtes erweitert sich zweckmässigerweise unterhalb seiner Einschnürung bis zu seiner Mündung. Das fördert den Materialdurchsatz infolge der damit verbundenen Entspannung des Materials sowie auch im Zusammenhang mit dem unter der hohen Drehzahl der Trägerscheibe entstehenden Sog des Schneidwerkes.

Nachstehend wird ein Ausführungsbeispiel der Erfindung anhand der Zeichnung näher beschrieben.

Es zeigen:

Figur 1 einen Aufriss im Längsmittelschnitt entlang der Linie A–A in Figur 2.

Figur 2 eine Draufsicht bzw. in der unteren Hälfte einen Schnitt entlang der Linie B–B in Figur 1 und

Figur 3 in vergrösserter Darstellung einen Ausschnitt aus Figur 2.

Auf zwei Beinbügeln 1 und 2 ist eine Grundplatte 3 des Geräts abgestützt und mit Schrauben 3' befestigt. Sie trägt oben zentral einen Elektromotor 4, der mit einer Auslaufbremse ausgerüstet ist, um ihn aus Sicherheitsgründen alsbald nach einem Abschalten zum Stillstand zu bringen. Auf dem Motorwellenstummel 5 ist eine Trägerscheibe 6 befestigt unter Zusammenschluss einer Gewindemutter 7, einer Andrückscheibe 8, und einer Zwischenlegscheibe 9, die an einem Schulterringbund 10 des Wellenstummels 5 anliegt und in verschiedenen Stärken austauschbar ist, womit die Höhenlage der Trägerscheibe einstell- und sehr genau justierbar ist. Auf der Trägerscheibe 6 sind drei unter sich gleiche Messer 11 über je einem in Drehrichtung D vorlaufenden Schlitz 12 befestigt. Die Längsschneide 13 jedes Messers 11 ist in ihrer radialen Erstreckung so verschränkt, dass sie zum äusseren Trägerscheibenrand, der einen aufragenden Randkragen 14 trägt, hin in Drehrichtung D vorläuft.

Dicht oberhalb der Rotationsebene der Messer 11 mündet die Randkontur des lotrecht stehenden Einfüllschachtes 16, der sich unter seiner von zwei Gummifahnen 17 abgedeckten Trichtereinschnürung 18 des eigentlichen Beschickungsbehälters 19 bis zu seiner Mündung erweitert. Dabei ist die Randkontur Bestandteil eines auswechselbaren Schneidrahmens 21 (Brille) der mit Schrauben 20 an der Grundplatte 3 befestigt ist. Dieser Schneidrahmen 21 wirkt als Gegenmesser für das vorbeistreichende Messer 11. Der Schnittspalt zwischen ihnen lässt sich mit Hilfe von Unterlegscheiben 9 justieren, je wie es das zu zerkleinernde Gut erfordert, wozu auch Baumschnitt bis zu einem je nach Leistung des Motors 4 begrenzten Astdurchmesser gehören kann.

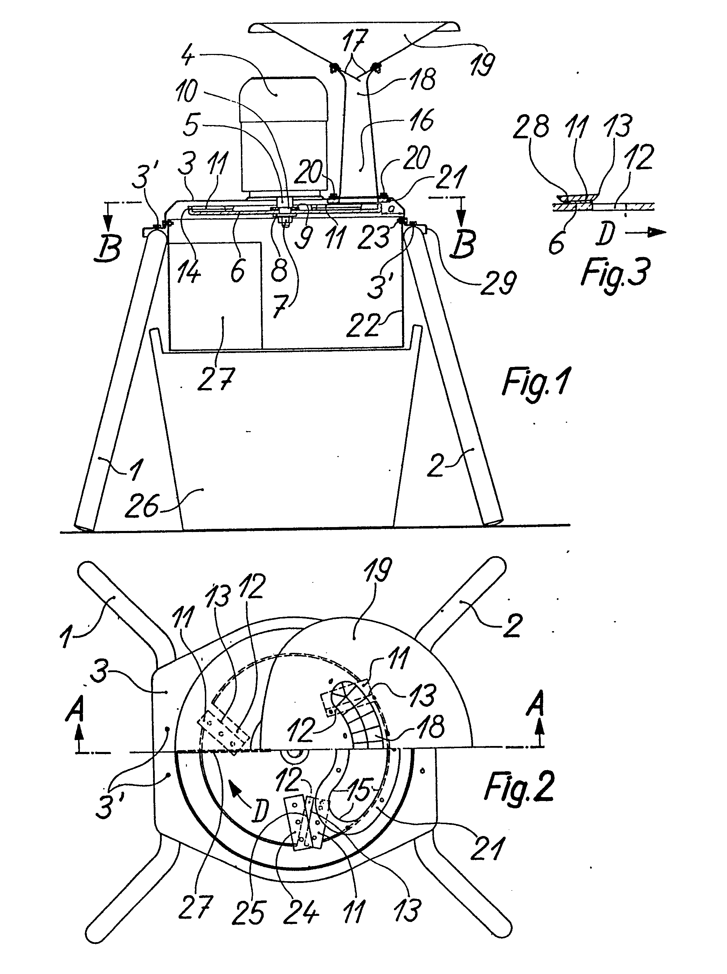

Der neben dem zentral angeordneten Elektromotor 4 plazierte Einfüllschacht 16 ist zur Erzielung eines grossen Fassungsvermögens so um den Elektromotor 4 herumgelegt, dass sein waagrechter Querschnitt kreisringsegmentförmig ist, wie am besten aus Figur 2 erkennbar ist.

Ein Auswurfschacht 22 ist bei 23 an einem abwärts gekröpften Randkragen 29 der Grundplatte 3 angeschraubt und umfasst mit einem ein Verstopfen verhindernden übergreifenden Abstand a die Trägerscheibe 6. In Drehrichtung D ist der Einfüllschachtmündung 15 in kurzem Abstand ein weiteres Nachschneidegegenmesser 24 mit in radialer Längsschneide-Erstreckung 25 nachstationiert. Damit können beim ersten Schnittvorgang verbliebene Faserzusammenhänge nachgeschnitten werden, allenfalls in nochmaliger Nachfolgewiederholung.

Unter dem Auswurfschacht 22 steht ein Auffang- und Transportgefäss 26. Zur Bremsung eines durch die hohe Umdrehungszahl der Trägerscheibe 6 möglichen Luftwirbels im Auswurfschacht 22 dient eine Blechwand 27. Andererseits kann die entstehende Luftbewegung zur Erzeugung eines Sogs auf die Mündung des Einfüllschachtes 16 genutzt werden, um den Materialfluss in ihm zu beschleunigen. Zu dem Zweck erweitert sich sein Querschnitt auch unterhalb seiner engsten Trichterstelle 18. Eine Messerunterlage 28 lässt hochwertigen Messerwerkstoff sparen.

**Patentansprüche**

1. Häckselgerät für Gartenabfälle und dergleichen, vorzugsweise von weicher Beschaffenheit, das auf Beinen (1, 2) hochsteht und mit einer um eine lotrechte Achse rotierenden Trägerscheibe (6) für wenigstens ein Messer (11) versehen ist, das über einem durch die Trägerscheibe (6) hindurchgehenden vorlaufenden Schlitz (12) auf ihr befestigt ist und dessen über die Trägerscheiben-Oberseite vorragende Längsschneide mit mindestens einem stationären Gegenmesser zusammenwirkt, das im Bereich der unteren Randkontur eines mit einem Einfüllschacht versehenen Beschickungsbehälters (19) angeordnet ist, dadurch gekennzeichnet, dass eine blosse, allenfalls mit einem abwärtigen Randkragen (29) versteifte, die Messerträgerscheibe (6) überdeckende waagrechte Grundplatte (3) auf den Beinen (1, 2) befestigt ist und als auf seiner Oberseite den Einfüllschacht (16) neben dem Elektromotor (4) tragendes Gerätegestell dient, an dessen Unterseite ein lotrecht stehender, unten offener Auswurfschacht (22) befestigt ist (bei 23), der die an der Welle (5) des Motors (4) sitzende Messerträgerscheibe (6) koaxial umgibt.

2. Häckselgerät nach Anspruch 1, dadurch gekennzeichnet, dass der Auswurfschacht (22) die Trägerscheibe (6) mit einem zur Verhinderung eines Verstopfens ausreichend übergreifenden Abstand (a) umgibt.

3. Häckselgerät nach Anspruch 1 oder 2, gekennzeichnet durch einen aufragenden Randkragen (14) an der Trägerscheibe (6).

4. Häckselgerät nach Anspruch 1, 2 oder 3, dadurch gekennzeichnet, dass die Längsschneide (13) des Messers (11) in ihrer radialen Erstreckung so verschränkt ist, dass sie zum äusseren Trägerscheibenrand (14) hin in Drehrichtung (D) verläuft.

5. Häckselgerät nach einem der vorhergehenden Ansprüche, gekennzeichnet durch ein oder mehrere in Drehrichtung (D) der Einfüllschachtmündung (15) in kurzen Abständen nachstationierte Nachschneidegegenmesser (24), vorzugsweise in radialer Längsschneiden-Erstreckung (25).

6. Häckselgerät nach einem der vorhergehenden Ansprüche, dadurch gekennzeichnet, dass sich der Querschnitt des Einfüllschachtes (16) unterhalb seiner Trichtereinschnürung (18) bis zu seiner Mündung erweitert.

7. Häckselgerät nach einem der vorhergehenden Ansprüche, dadurch gekennzeichnet, dass an der Grundplatte (3) ein vorzugsweise justierbarer Schneidrahmen (21), der Bestandteil der mündungsseitigen Randkontur des Beschickungsbehälters (19) ist, befestigt ist.

8. Häckselgerät nach einem der vorhergehenden Ansprüche, dadurch gekennzeichneit, dass der waagrechte Querschnitt des Einfüllschachts (16) kreisringsegmentförmig ausgebildet ist (Figur 2).

9. Häckselgerät nach einem der vorhergehenden Ansprüche, dadurch gekennzeichnet, dass der Einfüllschacht (16) lotrecht stehend angeordnet ist.

**Revendications**

1. Hacheuse pour débris de jardin et analogues, de préférence, de nature tendre, cette hacheuse se dressant sur des pieds (1, 2), tandis qu'elle est pourvue d'un disque support (6) tournant autour d'un axe perpendiculaire et prévu pour au moins une lame (11) qui est fixée sur ce disque via une fente (12) en avance traversant le disque support (6) et dont le tranchant-longitudinal ressortant au-dessus de la face supérieure du disque support, coopère avec au moins une contrelame fixe qui est disposée dans la zone du contour marginal inférieur d'un récipient de chargement (19) pourvu d'un entonnoir d'introduction, caractérisée en ce qu'une simple plaque de base horizontale (3) chevauchant le disque porte-lame (6) et, à la rigueur, renforcée par un collet marginal descendant (29), est fixée sur les pieds (1, 2) et fait en même temps office de bâti pour l'appareil, supportant, sur sa face supérieure, le conduit d'introduction (16) en plus du moteur électrique (4), bâti sur la face inférieure duquel est fixé, (en 23), un conduit d'éjection (22) disposé perpendiculairement et ouvert dans le bas entourant coaxialement le disque porte-lame (6) prenant appui sur l'arbre (5) du moteur (4).

2. Hacheuse selon la revendication 1, caractérisée en ce que le conduit d'éjection (22) entoure le disque support (6) à une distance de chevauchement (a) suffisante pour empêcher une obstruction.

3. Hacheuse selon la revendication 1 ou 2, caractérisée en ce qu'elle comporte un collet marginal en saillie (14) à proximité du disque support (6).

4. Hacheuse selon la revendication 1, 2 ou 3, caractérisée en ce que, à l'étendue radiale du tranchant longitudinal (13) de la lame (11), en donne de la voie de telle sorte qu'il s'étende en direction du bord extérieur (14) du disque support dans le sens de rotation (D).

5. Hacheuse selon une des revendications précédentes, caractérisée en ce qu'elle comporte une ou plusieurs contre-lames de découpage-ultérieur (24) fixées en aval à de courtes distances dans le sens de rotation (D) de l'embouchure (15) de l'entonnoir d'introduction, de préférence dans l'étendue radiale (25) des tranchants longitudinaux.

6. Hacheuse selon une des revendications précédentes, caractérisée en ce que, en dessous de son étranglement (18), la section transversale de l'entonnoir d'introduction (16) s'élargit jusqu'à son embouchure.

7. Hacheuse selon une des revendications précédentes, caractérisée en ce que, sur la plaque de base (3), est fixé un bâti de coupe (21), de préférence, ajustable constituant un élément du contour marginal du récipient de chargement (19), qui est situé du côté de l'embouchure.

8. Hacheuse selon une des revendications précédentes, caractérisée en ce que la section transversale horizontale du conduit d'introduction (16) est réalisée sous forme d'un segment de cercle (figure 2).

9. Hacheuse selon une des revendications précédentes, caractérisée en ce que le conduit d'introduction (16) est disposée vertical.

**Claims**

1. A chopping machine for gardening waste or the like, preferably of soft consistency, which rests on legs (1, 2) in an elevated position and has a carrier disk (6) rotating round a vertical axis and carrying at least one blade (11) which, above a slot (12) passing through the carrier disk (6) and running ahead, is fixed to the latter and of which the longitudinal cutting edge projecting over the upper side of the carrier disk (6) cooperates with at least one stationary counter blade located at the lower rim of a charging reservoir (19) provided with a funnel tube (16), characterized in that, fixed to the legs (1, 2) there is a horizontal base plate (3) which is bare, or at the most strengthened by a marginal collar (29) reaching downwards, covers the carrier disk (6), and serves as a frame carrying on its upper side the inlet tube (16) and the electric motor (4), and attached to its lower side (at 23) an outlet tube (22) which is in aper a perpendicular position, is open at the bottom, and coaxially surrounds the carrier disk (6) located at the shaft (5) of the motor (4).

2. A chopping machine as claimed in claim 1 characterized in that the outlet tube (22) surrounds the carrier disk (6) at a distance (a) sufficiently overlapping so as to prevent any blocking.

3. A chopping machine as claimed in claim 1 or 2 characterized in that the carrier disk (6) has a marginal collar (14) reaching upwards.

4. A chopping machine as claimed in claim 1, 2 or 3 characterized in that the longitudinal cutting edge (13) of the balde (11) is so set in its radial extension that it runs in the direction of turning (D) towards the outer edge (14) of the carrier disk (6).

5. A chopping machine as claimed in anyone of the preceding claims characterized in that there is/are one or several recutting counter blades (24) which, in the direction of turning (D), are positioned after the mouth (15) of the funnel tube (16) and spaced at short intervals, and of which the longitudinal cutting edges pereferably extend radially.

6. A chopping machine as claimed in anyone of the preceding claims characterized in that the corss-section of the inlet tube (16) increases from below its contraction (18) to its mouth (15).

7. A chopping machine as claimed in anyone of the preceding claims characterized in that, attached to the base plate (3), there is a preferably adjustable cutting frame (21) which is part of the rim of the mouth (15) of the charging reservoir (19).

8. A chopping machine as claimed in anyone of the preceding claims characterized in that the horizontal cross-section fo the inlet tube (16) is in the form of a circular ring sector (figure 2).

9. A chopping machine as claimed in anyone of the preceding claims characterized in that the inlet tube (16) is arranged perpendicular.

Fig.1

Fig.3

Fig.2